# EUROPÄISCHE PATENTANMELDUNG

(11) **EP 3 734 032 A1**
(43) Veröffentlichungstag der Anmeldung: **04.11.2020**
(21) Anmeldenummer: 20165765.7
(22) Anmeldetag: 26.03.2020
(51) Int. Cl.: F01M 11/04, F16N 31/00

(54) **VERFAHREN UND STEUERGERÄT ZUM BETREIBEN EINER OTTO-BRENNKRAFTMASCHINE ODER EINER IM OTTO-BETRIEBSMODUS BETRIEBENEN DUAL-FUEL-BRENNKRAFTMASCHINE**

(30) Priorität: 29.04.2019 DE 102019111012
(71) Anmelder: MAN Energy Solutions SE, 86153 Augsburg (DE)
(72) Erfinder: Rohbogner, Christoph, 86199 Augsburg (DE); Lange, Jens, 86316 Friedberg (DE); Wilke, Ingo, 82327 Tutzing (DE); Beck, Andreas, 86690 Mertingen (DE)

(57) **Zusammenfassung**

Verfahren zum Betreiben einer Otto-Brennkraftmaschine (1) oder einer im Otto-Betriebsmodus betriebenen Dual-Fuel-Brennkraftmaschine (1), wobei die zu betreibende Brennkraftmaschine (1) über einen Ölkreislauf (3) mit Schmieröl versorgt wird, wobei ein Messwert der Total-Base-Number und/oder ein Messwert der Oxidation des im Ölkreislauf (3) zur Schmierung aktuell verwendeten Schmieröls erfasst wird, wobei abhängig vom ermittelten Messwert der Total-Base-Number und/oder abhängig vom ermittelten Messwert der Oxidation eine Austauschölmenge für den Ölkreislauf (3) bestimmt wird, wobei dem Ölkreislauf (3) aktuell verwendetes Schmieröl in einem der Austauschölmenge entsprechenden Umfang entnommen wird, wobei dem Ölkreislauf (3) neues Schmieröl in einem der Austauschölmenge entsprechenden Umfang zugeführt wird. Fig. 1

## Beschreibung

Die Erfindung betrifft ein Verfahren zum Betreiben einer Otto-Brennkraftmaschine oder einer im Otto-Betriebsmodus betriebenen Dual-Fuel-Brennkraftmaschine. Des Weiteren betrifft die Erfindung ein Steuergerät zum Betreiben einer Otto-Brennkraftmaschine oder einer im Otto-Betriebsmodus betriebenen Dual-Fuel-Brennkraftmaschine.

Die hier vorliegende Erfindung betrifft insbesondere den Bereich sogenannter Großmotoren bzw. Großbrennkraftmaschinen, deren Zylinder Kolbendurchmesser von mehr als 140 mm, insbesondere von mehr als 175 mm, aufweisen. Bei solchen Großbrennkraftmaschinen handelt es sich zum Beispiel um Schiffsmotoren.

Brennkraftmaschinen müssen im Betrieb mit Schmieröl geschmiert werden. Das Schmieröl unterliegt dabei einer betriebsbedingten Alterung. Die Alterung des Schmieröls kann dazu führen, dass das Schmieröl die Schmierwirkung verliert und es zu einer Beschädigung der Brennkraftmaschine kommt. Dies muss vermieden werden.

Im Bereich sogenannter Großmotoren ist es üblich, dass ein Teil des Schmieröls in die Brennkammer der Zylinder gelangt und dort zusammen mit dem zu verbrennenden Kraftstoff verbrannt wird. Dieser betriebsbedingte Schmierölverbrauch wird dadurch kompensiert, dass dem Schmierölkreislauf von Zeit zu Zeit neues Schmieröl zugeführt wird, nämlich dann, wenn zu viel Schmieröl im Bereich der Zylinder verbrannt wurde.

Durch den Verbrauch bzw. das Verbrennen des Schmieröls im Bereich der Zylinder und das Nachfüllen neuen Schmieröls zum Ausgleich dieses Ölverbrauchs wird bei konventionellen Großbrennkraftmaschinen zumeist eine ausreichende Schmierwirkung des Schmieröls im Schmierölkreislauf aufrechterhalten, sodass es nicht erforderlich ist, einen kompletten Ölwechsel an der Brennkraftmaschine durchzuführen. Dies wäre mit großem Aufwand verbunden.

Das Verbrennen des Schmieröls im Bereich der Zylinder führt jedoch zu hohen Abgasemissionen. Mit zunehmend strengeren Emissionsvorschriften muss vermieden werden, dass Schmieröl im Bereich der Zylinder verbrannt wird. In diesem Fall reduziert sich die bei konventionellen Großbrennkraftmaschinen vorgenommene Nachfüllung verbrannten Schmieröls. Daher ist es bei Brennkraftmaschinen, bei welchen zur Verbesserung der Abgasemissionen möglichst wenig Schmieröl im Bereich der Zylinder verbrannt wird, erforderlich, dann, wenn die Alterung des Schmieröls zu stark fortgeschritten ist, einen kompletten Ölwechsel auszuführen. Dies ist aufwendig.

Es besteht daher Bedarf daran, auch bei solchen neueren Brennkraftmaschinen, bei welchen im Bereich der Zylinder Schmieröl nur noch in geringerem Umfang verbrannt wird, auf einen kompletten Ölwechsel verzichten zu können.

Hiervon ausgehend liegt der vorliegenden Erfindung die Aufgabe zugrunde, ein neuartiges Verfahren und Steuergerät zum Betreiben einer Otto-Brennkraftmaschine oder einer im Otto-Betriebsmodus betriebenen Dual-Fuel-Brennkraftmaschine zu schaffen.

Diese Aufgabe wird durch ein Verfahren zum Betreiben einer Otto-Brennkraftmaschine oder einer im Otto-Betriebsmodus betriebenen Dual-Fuel-Brennkraftmaschine nach Anspruch 1 gelöst.

Erfindungsgemäß wird ein Messwert der Total-Base-Number und/oder ein Messwert der Oxidation des im Ölkreislauf zur Schmierung aktuell verwendeten Schmieröls erfasst. Abhängig vom Messwert der Total-Base-Number und/oder abhängig vom Messwert der Oxidation wird eine Austauschölmenge für den Ölkreislauf bestimmt. Dem Ölkreislauf wird aktuell verwendetes Schmieröl in einem der bestimmten Austauschölmenge entsprechenden Umfang entnommen. Ferner wird dem Ölkreislauf neues Schmieröl in einem der bestimmten Austauschölmenge entsprechenden Umfang zugeführt. Mit der hier vorliegenden Erfindung wird erstmals vorgeschlagen, an dem zur Schmierung aktuell verwendeten Schmieröl die Total Base Number (TBN) und/oder die Oxidation des verwendeten Schmieröls messtechnisch zu erfassen. Abhängig von dem jeweiligen erfassten Messwert wird die Austauschölmenge für die Brennkraftmaschine bestimmt. Im Umfang der Austauschölmenge wird dann dem Ölkreislauf gezielt Schmieröl entnommen, wobei im entsprechenden Umfang dem Schmierölkreislauf neues Schmieröl zugeführt wird. Hiermit kann dann ein Schmierölverbrauch ohne Auswirkungen auf Abgasemissionen nachgebildet werden. Das aus dem Ölkreislauf entnommene Schmieröl wird in einem Sammelbehälter gesammelt und kann nachfolgend entsorgt oder weiterverwendet werden. So kann selbst bei Brennkraftmaschinen, bei denen baubedingt im Bereich der Zylinder wenig Schmieröl verbrannt wird, auf einen kompletten Ölwechsel verzichtet werden.

Nach einer Weiterbildung der Erfindung werden der Messwert der Total-Base-Number und der Messwert der Oxidation des im Ölkreislauf zur Schmierung aktuell verwendeten Schmieröls erfasst, wobei abhängig von dem ermittelten Messwert der Total-Base-Number und abhängig von dem ermittelten Messwert der Oxidation die Austauschölmenge für den Ölkreislauf bestimmt wird. Die Ermittlung der Austauschölmenge abhängig von beiden Messwerten, also sowohl abhängig von der Total Base Number als auch abhängig von der Oxidation des Schmieröls, ist besonders bevorzugt, um für eine Otto-Brennkraftmaschine oder eine im Otto-Betriebsmodus betriebene Dual-Fuel-Brennkraftmaschine die Austauschölmenge besonders vorteilhaft zu bestimmen.

Nach einer Weiterbildung der Erfindung wird die Austauschölmenge für den Ölkreislauf abhängig von dem ermittelten Messwert der Total-Base-Number und/oder abhängig von dem ermittelten Messwert der Oxidation kennfeldabhängig oder kennlinienabhängig bestimmt. Eine kennfeldabhängige oder kennlinienabhängige Bestimmung der Austauschölmenge ist besonders einfach umsetzbar. Für verschiedene Stützstellen der Messwerte der Total Base Number und/oder der Oxidation können Austauschölmengen hinterlegt werden, wobei im Bedarfsfall zwischen einzelnen Messwerten interpoliert werden kann.

Das Steuergerät zum Betreiben einer Ottobrennkraftmaschine oder einer im Otto-Betriebsmodus betriebenen Dual-Fuel-Brennkraftmaschine ist in Anspruch 6 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

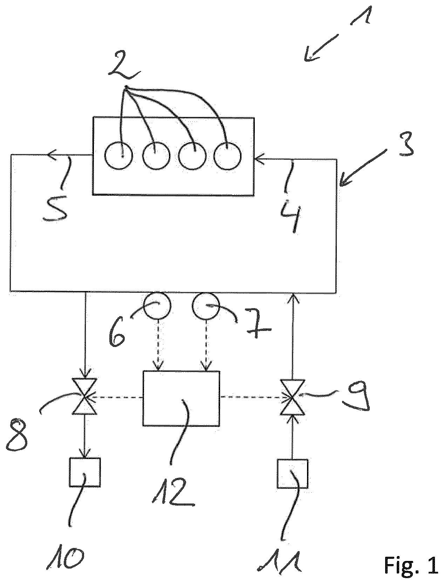

- Fig. 1:: ein Schema einer Brennkraftmaschine.

Die Erfindung betrifft ein Verfahren sowie ein Steuergerät zum Betreiben einer Otto-Brennkraftmaschine oder einer im Otto-Betriebsmodus betriebenen Dual-Fuel-Brennkraftmaschine.

Fig. 1 zeigt stark schematisiert ein Schema einer Brennkraftmaschine 1, die mehrere Zylinder 2 und einen Ölkreislauf 3 umfasst. Der Ölkreislauf 3 dient der Versorgung insbesondere der Zylinder 2 der Brennkraftmaschine 1 mit Schmieröl, wobei das Schmieröl den Zylindern 2 der Brennkraftmaschine 1 über einen Vorlauf 4 zugeführt und von denselben über einen Rücklauf 5 abgeführt wird.

Im Sinne der hier vorliegenden Erfindung wird vorgeschlagen, einen Messwert der Total-Base-Number (TBN) und/oder einen Messwert der Oxidation des im Ölkreislauf 3 zur Schmierung aktuell verwendeten Schmieröls zu erfassen. Der Messwert der Total-Base-Number des im Ölkreislauf 3 zur Schmierung aktuell verwendeten Schmieröls wird mithilfe eines ersten Sensors 6 erfasst. Der Messwert der Oxidation des im Ölkreislauf 3 zur Schmierung aktuell verwendeten Schmieröls wird mithilfe eines zweiten Sensors 7 erfasst.

Die Anordnung der Sensoren 6 und 7 im Ölkreislauf ist beliebig. Die beiden Sensoren 6 und 7 können auch zu einer Baueinheit zusammengefasst sein.

Abhängig vom ermittelten Messwert der Total-Base-Number und/oder abhängig vom ermittelten Messwert der Oxidation wird eine Austauschölmenge für den Ölkreislauf 3 bestimmt. Hierzu übermitteln die beiden Sensoren 6, 7 ihren jeweiligen Messwert an ein Steuergerät 12, welches abhängig von dem Messwert der Total-Base-Number und/oder abhängig vom Messwert der Oxidation die Austauschölmenge für den Ölkreislauf 3 bestimmt.

Erfindungsgemäß wird dem Ölkreislauf 3 aktuell verwendetes Schmieröl in einem der bestimmten Austauschölmenge entsprechenden Umfang entnommen, ferner wird dem Ölkreislauf 3 neues Schmieröl in einem der bestimmten Austauschölmenge entsprechenden Umfang zugeführt. Das Steuergerät 12 ermittelt dabei Stellgrößen, in Abhängigkeit derer dieser Ölaustausch vorgenommen wird.

So zeigt Fig. 1 ein erstes Ventil 8, welches vom Steuergerät 12 direkt oder indirekt unter Zwischenschaltung eines weiteren Steuergeräts angesteuert werden kann, um dem Ölkreislauf 3 Schmieröl in dem der bestimmten Austauschölmenge entsprechenden Umfang zu entnehmen und in einem Sammelbehälter 10 zu sammeln. Ferner zeigt Fig. 1 ein weiteres Ventil 9, welches ebenfalls ausgehend vom Steuergerät 12 ansteuerbar ist, um dem Ölkreislauf 3 neues Schmieröl, welches in einem Vorratsbehälter 11 bereitgehalten wird, zuzuführen.

Mit der Erfindung wird demnach vorgeschlagen, abhängig vom Messwert der Total-Base-Number und/oder abhängig vom Messwert der Oxidation des im Ölkreislauf 3 zur Schmierung aktuell verwendeten Schmieröls eine definierte Ölmenge aus dem Ölkreislauf 3 zu entnehmen und diese gegen neues Schmieröl auszutauschen, und zwar im Umfang der abhängig von dem jeweiligen Messwert ermittelten Austauschölmenge.

Auf diese Art und Weise kann ein Ölverbrauch im Bereich der Zylinder 2 nachgebildet werden. Es kann fortlaufend eine definierte Austauschölmenge an Neuöl zugeführt werden, um die Schmieröleigenschaften des Schmieröls aufrechtzuerhalten und einen kompletten Ölwechsel an der Brennkraftmaschine 1 überflüssig zu machen.

Die Ermittlung der Austauschölmenge für den Ölkreislauf abhängig vom ermittelten Messwert der Total-Base-Number und/oder abhängig von dem ermittelten Messwert der Oxidation erfolgt vorzugsweise kennfeldabhängig oder kennlinienabhängig. Das Kennfeld oder die Kennlinie ist dabei im Steuergerät 12 hinterlegt. Für unterschiedliche Stützstellen von Messwerten sind Austauschölmengen hinterlegt. Zwischen einzelnen Stützstellen kann interpoliert oder auch extrapoliert werden.

Das Verfahren kommt bei Otto-Brennkraftmaschinen oder bei im Otto-Betriebsmodus betriebenen Dual-Fuel-Brennkraftmaschinen zum Einsatz. Insbesondere wird die Austauschölmenge abhängig von beiden Messwerten bestimmt, also sowohl abhängig von der Total-Base-Number als auch abhängig von der Oxidation des Schmieröls. Diese Vorgehensweise ist für Otto-Brennkraftmaschinen oder im Otto-Betriebsmodus betriebene Dual-Fuel-Motoren besonders bevorzugt.

Die Erfindung betrifft weiterhin ein Steuergerät 12 zur Ausführung des Verfahrens. Das Steuergerät ist eingerichtet, das oben beschriebene Verfahren steuerungsseitig auszuführen. Das Steuergerät 12 verfügt hierzu über Datenschnittstellen, um mit den an der Ausführung des erfindungsgemäßen Verfahrens beteiligten Baugruppen, insbesondere mit den Sensoren 6 und 7 und den Ventilen 8 und 9, Daten auszutauschen. Ferner umfasst das Steuergerät 12 als hardwareseitige Baugruppen einen Prozessor zur Datenverarbeitung und einen Speicher zur Datenspeicherung. Ferner umfasst das Steuergerät 12 softwareseitige Mittel, bei welchen es sich um Programmbausteine handelt, die der Ausführung des erfindungsgemäßen Verfahrens dienen.

Das Steuergerät 12 empfängt von dem jeweiligen Sensor 6, 7 den jeweiligen Messwert, vorzugsweise den Messwert der Total-Base-Number vom Sensor 6 und den Messwert der Oxidation vom Sensor 7. Das Steuergerät 12 bestimmt abhängig von dem jeweiligen Messwert die Austauschölmenge. Abhängig von der Austauschölmenge gibt das Steuergerät 12 Stellsignale aus, in Abhängigkeit derer der Ölaustausch erfolgt, in Abhängigkeit derer demnach aktuell verwendetes Schmieröl aus dem Ölkreislauf 3 entnommen und neues Schmieröl dem Ölkreislauf 3 zugeführt wird.

Die betrifft insbesondere den Bereich sogenannter Großmotoren bzw. Großbrennkraftmaschinen, deren Zylinder Kolbendurchmesser von mehr als 140 mm, insbesondere von mehr als 175 mm, aufweisen. Bei solchen Großbrennkraftmaschinen handelt es sich zum Beispiel um Schiffsmotoren. Diese sind bei der Erfindung als Otto-Brennkraftmaschinen oder als im Otto-Betriebsmodus betriebene Dual-Fuel-Brennkraftmaschinen ausgeführt. Solche Brennkraftmaschinen verbrennen als Kraftstoff gasförmigen Kraftstoff wie Erdgas oder flüssigen Kraftstoff wie Methanol. Brennkraftmaschinen die gasförmigen Kraftstoff verbrennen werden auch als Gasmotoren bezeichnet.

### Bezugszeichenliste

- 1: Brennkraftmaschine
- 2: Zylinder
- 3: Ölkreislauf
- 4: Vorlauf
- 5: Rücklauf
- 6: Sensor
- 7: Sensor
- 8: Ventil
- 9: Ventil
- 10: Sammelbehälter
- 11: Vorratsbehälter
- 12: Steuergerät

## Patentansprüche

1. Verfahren zum Betreiben einer Otto-Brennkraftmaschine (1) oder einer im Otto-Betriebsmodus betriebenen Dual-Fuel-Brennkraftmaschine (1),
wobei die zu betreibende Brennkraftmaschine (1) über einen Ölkreislauf (3) mit Schmieröl versorgt wird,
wobei ein Messwert der Total-Base-Number und/oder ein Messwert der Oxidation des im Ölkreislauf (3) zur Schmierung aktuell verwendeten Schmieröls erfasst wird,
wobei abhängig vom ermittelten Messwert der Total-Base-Number und/oder abhängig vom ermittelten Messwert der Oxidation eine Austauschölmenge für den Ölkreislauf (3) bestimmt wird,
wobei dem Ölkreislauf (3) aktuell verwendetes Schmieröl in einem der Austauschölmenge entsprechenden Umfang entnommen wird,
wobei dem Ölkreislauf (3) neues Schmieröl in einem der Austauschölmenge entsprechenden Umfang zugeführt wird.

2. Verfahren nach Anspruch 1, **dadurch gekennzeichnet, dass**
der Messwert der Total-Base-Number und der Messwert der Oxidation des im Ölkreislauf (3) zur Schmierung aktuell verwendeten Schmieröls erfasst werden,
abhängig von dem ermittelten Messwert der Total-Base-Number und abhängig von dem ermittelten Messwert der Oxidation die Austauschölmenge für den Ölkreislauf (3) bestimmt wird.

3. Verfahren nach Anspruch 1 oder 2, **dadurch gekennzeichnet, dass** der Messwert der Total-Base-Number des im Ölkreislauf (3) zur Schmierung aktuell verwendeten Schmieröls mit Hilfe eines ersten Sensors (6) erfasst wird.

4. Verfahren nach einem der Ansprüche 1 bis 3, **dadurch gekennzeichnet, dass** der Messwert der Oxidation des im Ölkreislauf (3) zur Schmierung aktuell verwendeten Schmieröls mit Hilfe eines zweiten Sensors (7) erfasst wird.

5. Verfahren nach einem der Ansprüche 1 bis 4, **dadurch gekennzeichnet, dass** die Austauschölmenge für den Ölkreislauf (3) abhängig von dem ermittelten Messwert der Total-Base-Number und/oder abhängig von dem ermittelten Messwert der Oxidation kennfeldabhängig oder kennlinienabhängig bestimmt wird.

6. Steuergerät (12) zum Betreiben einer Otto-Brennkraftmaschine (1) oder einer im Otto-Betriebsmodus betriebenen Dual-Fuel-Brennkraftmaschine (1),
wobei das Steuergerät (12) von einem Sensor (6) einen Messwert der Total-Base-Number und/oder von einem Sensor (7) einen Messwert der Oxidation des aktuell zur Schmierung der Brennkraftmaschine verwendeten Schmieröls empfängt,
wobei das Steuergerät (12) abhängig vom Messwert der Total-Base-Number und/oder abhängig vom Messwert der Oxidation eine Austauschölmenge bestimmt,
wobei das Steuergerät (12) ein Stellsignal ausgibt, in Abhängigkeit dessen dem Ölkreislauf aktuell verwendetes Schmieröl in einem der bestimmten Austauschölmenge entsprechenden Umfang entnehmbar ist,
wobei das Steuergerät (12) ein Stellsignal ausgibt, in Abhängigkeit dessen dem Ölkreislauf neues Schmieröl in einem der bestimmten Austauschölmenge entsprechenden Umfang zuführbar ist.

7. Steuergerät nach Anspruch 6, **dadurch gekennzeichnet, dass** dasselbe eingerichtet ist, das Verfahren nach einem der Ansprüche 1 bis 5 steuerungsseitig auszuführen.
